# EUROPÄISCHE PATENTSCHRIFT

(11) **EP 2 275 786 B1**
(45) Veröffentlichungstag und Bekanntmachung des Hinweises auf die Patenterteilung: **19.10.2016**
(21) Anmeldenummer: 10007187.7
(22) Anmeldetag: 12.07.2010
(51) Int. Cl.: F15D 1/02, G01F 5/00, G01F 7/00, G01F 15/00, F15C 1/00, G01F 1/684, G01F 15/12

(54) **Vorrichtung zur Bereitstellung von konditionierten Fluidströmungen**
Device for preparing conditioned fluid flows
Dispositif de préparation d'écoulements de fluide conditionnés

(30) Priorität: 17.07.2009 DE 202009009759 U
(43) Veröffentlichungstag der Anmeldung: 19.01.2011
(73) Patentinhaber: Bürkert Werke GmbH, 74653 Ingelfingen (DE)
(72) Erfinder: Chalupa, Stefan, 84214 Schöntal (DE); Reiher, Mario, 74629 Pfedelbach (DE); Gunnesch, Johann, 75638 Waldenburg (DE); Schuler, Jan, 74676 Niedernhall (DE); Kabisch, Gunter, Dr., 74676 Niedernhall (DE); Wiedemann, Juergen, 74653 Ingelfingen (DE)
(74) Vertreter: Prinz & Partner mbB

(56) Entgegenhaltungen:
- EP-A1- 0 458 998
- EP-A2- 0 831 303
- DE-A1- 19 705 660
- DE-A1-102004 005 760
- DE-A1-102004 019 521
- DE-U1- 20 208 716
- US-A- 4 781 536
- US-A1- 2004 123 672
- US-A1- 2004 187 927
- US-A1- 2008 016 957
- US-B1- 6 247 495

## Beschreibung

Die Erfindung betrifft eine Vorrichtung zur Bereitstellung von konditionierten Fluidströmungen.

Konditionierte Fluidströmungen spielen beispielsweise in thermischen Massendurchflussmessgeräten eine bedeutende Rolle. Ein Strömungswiderstandselement erzeugt dort in einem Hauptströmungskanal einen geringen Druckabfall, der einen Durchfluss über einen parallel zum Hauptkanal angeordneten Bypasskanal bewirkt, in welchem der Durchflusssensor sitzt. Häufig werden noch weitere, die Strömung beeinflussende Elemente in den Hauptströmungskanal eingesetzt.

Aus der gattungsgemäßen US 6 247 495 B1 ist eine Vorrichtung zur Bereitstellung von konditionierten Fluidströmungen bekannt, bei der ein Einsatz in einen Hauptströmungskanal eingeführt ist, welcher ein Rohr mit konisch zulaufendem Kanal und einen im Rohr verschiebbar angeordneten kegeligen Körper umfasst. Durch Verstellen des kegeligen Körpers kann der zwischen Rohr und Körper vorhandene Ringspalt eingestellt werden.

Die US 4 781 536 hat ebenfalls eine Vorrichtung zur Bereitstellung von konditionierten Fluidströmungen zum Gegenstand, bei der im Kanal mehrere Scheiben mit Öffnungen fest eingebaut sind. Eine Scheibe ist austauschbar ausgeführt.

Das in der DE 10 2004 019 521 A1 gezeigte Durchflussmessgerät umfasst einen austauschbaren Einsatz mit einem mittleren wabenförmigen Körper sowie stromauf- und stromabwärts dieses Körpers mit Abstand hierzu angebrachten Gittern. Zusätzlich ist ein Filtergitter separat vom Einsatz und entfernt von diesem am sogenannten Hauptströmungsrohr angebracht.

Die DE 10 2004 005 760 A1 zeigt eine Durchfluss-Messvorrichtung, die einen integrierten Kanaleinsatz mit einer als Strömungswiderstandselement dienenden Querschnittsverengung hat. Die Durchfluss-Messvorrichtung weist zudem eine vom Kanaleinsatz separat ausgebildete Siebanordnung auf, die zwei identische Siebeinsätze umfasst.

Erfindungsgemäß wird ein Strömungskonditionierungs-Einsatz vorzugsweise für den Haupt-Strömungskanal eines Grundkörpers in Massendurchflussmessern zur Verfügung gestellt, wobei in diesem Einsatz zwischen zwei Abzweigungen vom Hauptströmungskanal für den parallelen Bypasskanal mindestens ein Strömungswiderstandselement angeordnet ist.

Der Strömungskonditionierungs-Einsatz lässt sich vorteilhaft einfach und unkompliziert auswechseln, so dass je nach Anwendungsfall und entsprechend des gewünschten Mediumsdurchflussess ein dafür geeigneter Einsatz gewählt und verwendet werden kann.

Es hat sich als günstig erwiesen, im Strömungskonditionierungs-Einsatz stromaufwärts vom Strömungswiderstandselement mindestens ein Doppelsieb anzuordnen. Das Doppelsieb besteht aus einem feinen Sieb und einem Stützsieb, die eine Einheit bilden und zum Beispiel miteinander vernietet werden. Das Stützsieb dient zur Stabilisierung des feinen Siebs, so dass dieses auch höheren Staudrücken standhält und nicht deformiert oder sogar beschädigt wird. Das Doppelsieb hat zum einen eine Filterfunktion und verhindert, dass eventuell im Medium vorhandene Schmutzanteile in den Sensorbereich gelangen. Zum anderen hat das Doppelsieb die Aufgabe, die Strömung des Mediums zu vergleichmäßigen, so dass beispielsweise die Länge und Art des Leitungsabschnitts, durch den das Medium vor Eintritt in den Hauptströmungskanal des Massendurchflussgeräts fließt, keinen Einfluss auf das Messergebnis hat.

Strömungswiderstandselemente sind an sich bekannt. Sie dienen dazu, eine möglichst laminare Strömung zu erzeugen. Bei laminarer Strömung besteht ein linearer Zusammenhang zwischen dem Durchfluss im Bypasskanal und dem vom Strömungswiderstand erzeugten Druckabfall. In Abhängigkeit von der gewünschten Durchflussmenge pro Zeiteinheit werden Strömungswiderstandelemente mit unterschiedlichen Öffnungsdurchmessern benötigt: für hohe Durchflüsse ist ein geringer Strömungswiderstand erforderlich, für kleine Durchflüsse dagegen ein hoher Strömungswiderstand. Deshalb wird gemäß dem Stand der Technik für ein Massendurchflussmess- und Regelgerät ein ganzes Sortiment an Strömungswiderstandselementen bereitgestellt, was aufwändig und teuer ist.

Der Hauptströmungskanal weist einen erweiterten Abschnitt auf, der durch einen Anschlag begrenzt ist und der den Strömungskonditionierungs-Einsatz axial aufnimmt. Das hat den Vorteil, dass eine definierte axiale Einbaulage des Einsatzes sichergestellt ist, was die Reproduzierbarkeit der Messwerte und damit auch die Genauigkeit der geregelten Durchflüsse gewährleistet.

Nach einem weiteren Aspekt der Erfindung stellt deshalb das Strömungswiderstandselement, das im Strömungskonditionierungs-Einsatz angeordnet ist, eine Kombination aus einer Blende und einem Strömungskonditionierelement dar. Das Strömungskonditionierelement ist aufgebaut aus einer Vielzahl paralleler Kanäle mit großem Gesamt-Öffnungsquerschnitt und wirkt mit Blenden unterschiedlicher Öffnungsdurchmesser zusammen. Dadurch lässt sich der gewünschte Durchflussbereich des Strömungswiderstands bei Verwendung nur eines einzigen Strömungskonditionierelements praktisch stufenlos einstellen. Die Kosten werden erheblich gesenkt, weil sich Blenden mit unterschiedlichen Bohrungsdurchmessern einfach und günstig herstellen lassen.

Eine bevorzugte Ausführungsform des Strömungskonditionierungs-Einsatzes ist im Wesentlichen rohrförmig ausgestaltet und weist eine Umfangseinschnürung auf, die mit der umgebenden Wandung des Hauptströmungskanals einen Ringraum bildet. Eine Abzweigung des Hauptströmungskanals, die diesen mit dem parallelen Bypasskanal verbindet, mündet in den Ringraum. Der Strömungskonditionierungs-Einsatz ist im Bereich der Umfangseinschnürung mit radialen Öffnungen versehen, so dass Medium aus dem Innenraum des Strömungskonditionierungs-Einsatzes zunächst in den Ringraum und dann in den Bypasskanal strömen kann. Die radialen Öffnungen liegen von einer Abzweigung des Hauptströmungskanals zum Bypasskanal axial entfernt, so dass sie nicht mit diesen fluchten.

Bedingt durch diese vorteilhafte Konstruktion betreffend den axialen Anschlag im Hauptströmungskanal, den Ringraum, die Umfangseinschnürung und die radialen Öffnungen im Strömungskonditionierungs-Einsatze ist keine Ausrichtung des Strömungskonditionierungs-Einsatzes im Hauptströmungskanal nötig. Somit entfällt nach einem Ausbau und Wiedereinsetzen desselben Strömungskonditionierungs-Einsatzes eine neue und zeitaufwändige Kalibrierung.

Der erfindungsgemäße rohrförmige Strömungskonditionierungs-Einsatz weist weiterhin vorzugsweise an seinen beiden axialen Enden in seinem Innenraum durch jeweils eine Stufe begrenzte Erweiterungen auf, in die an einem Ende das Strömungswiderstandselement und am anderen Ende das mindestens eine Doppelsieb eingesetzt wird. Dadurch werden die Positionen der Elemente im Strömungskonditionierungs-Einsatz und der Abstand der Elemente zueinander festgelegt. So werden definierte und reproduzierbare Strömungsverhältnisse geschaffen.

In einer bevorzugten Ausführungsform ist das Strömungskonditionierelement, das zusammen mit einer Blende den Strömungswiderstand bildet, aufgebaut aus einer Vielzahl paralleler Kanäle, und weist sehr kleine Wandstärken der Wände auf, welche die Kanäle begrenzen. Die Wandstärken liegen typischerweise im Bereich von 0,5 mm bis 0,05 mm.

Das Strömungskonditionierelement wird vorzugsweise durch Photopolymerisation aus einem Kunststoff durch schichtweises Wachsen über einer entsprechenden Maske hergestellt. Das hat den Vorteil, dass die gewünschten geringen Wandstärken realisiert, sehr niedrige Toleranzen eingehalten und nahezu beliebige Kanalgeometrien umgesetzt werden können.

Als besonders vorteilhafte Variante hat sich ein Strömungskonditionierelement erwiesen, welches annähernd trapezförmige Kanalquerschnitte aufweist.

Weitere Vorteile und Ausgestaltungen der Erfindung werden anhand der beigefügten Figuren beschrieben. Hierbei zeigen:
**Fig. 1** Schnittbild einer Vorrichtung zur Bereitstellung von konditionierten Fluidströmungen; und
**Fig. 2** Schnittbild eines Strömungskonditionierelements.

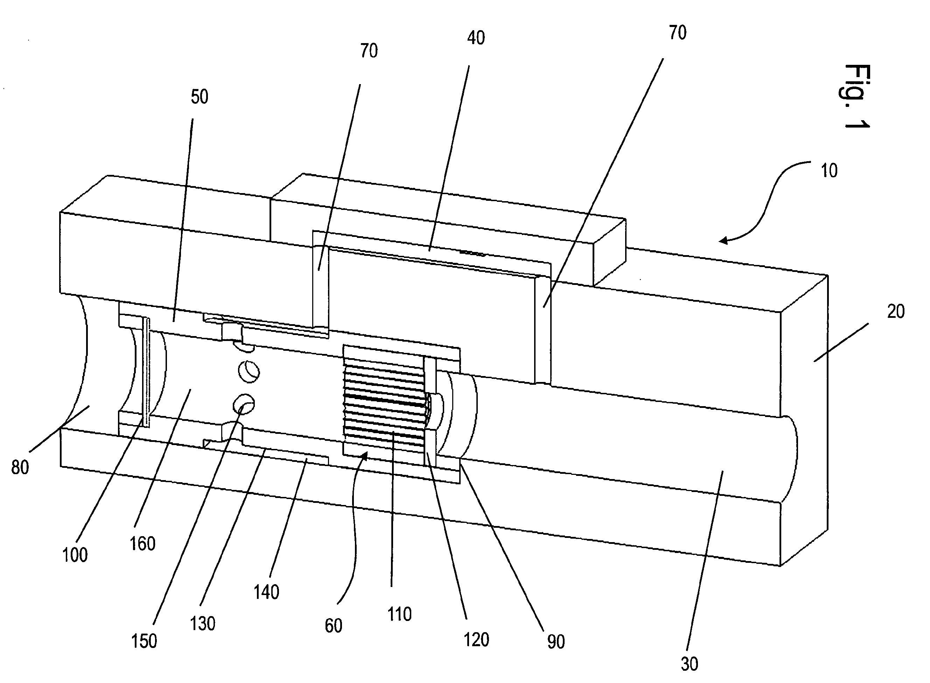

In **Fig. 1** ist ein Schnittbild einer Vorrichtung 10, vorzugsweise für einen Massendurchflussmesser, mit einem Grundkörper 20, der von einem Hauptströmungskanal 30 durchragt wird, zur Bereitstellung von konditionierten Fluidströmungen dargestellt. Vom Hauptströmungskanal 30 ist ein zu diesem paralleler Bypasskanal 40 abgezweigt und wieder zurückgeführt. Im Hauptströmungskanal 30 ist axial ein auswechselbarer Strömungskonditionierungs-Einsatz 50 mit einem Strömungswiderstandselement 60 so angeordnet, dass dieses zwischen den beiden Anschlüssen 70 des Bypasskanals 40 am Hauptströmungskanal 30 eine Druckdifferenz erzeugt.

Der Strömungskonditionierungs-Einsatz 50 stellt eine kompakte Einheit dar, die auch mehrere Strömungskonditionierungselemente aufnehmen kann. Das hat den Vorteil einer einfachen Montage und unkomplizierten Reinigung und Austauschbarkeit, wobei der Grundkörper 20 des Massendurchflussgeräts selbst unberührt bleibt und nicht etwa zerlegt werden muss. Je nach gewünschtem Durchflussbereich kann ein Strömungskonditionierungs-Einsatz 50 mit darauf abgestimmtem Strömungswiderstandselement 60 gewählt und wechselweise eingesetzt werden.

Der Hauptströmungskanal 30 weist vorzugsweise zur Aufnahme des Strömungskonditionierungs-Einsatzes 50 einen bezüglich des Durchmessers erweiterten Abschnitt 80 auf, der durch einen Anschlag 90 begrenzt ist. Dieser Anschlag definiert die axiale Einbaustellung des Strömungskonditionierungs-Einsatzes 50. So werden Schwankungen im Messsystem ausgeschlossen, die auf Grund unterschiedlicher Positionen des Strömungskonditionierungs-Einsatzes 50 im Hauptströmungskanal 30 entstehen könnten.

Der Strömungskonditionierungs-Einsatzes 50 weist vorteilhafterweise als weiteres Strömungskonditionierungselement stromaufwärts vom Strömungswiderstand 60 mindestens ein Doppelsieb 100 auf. Das Doppelsieb 100 ist in Strömungsrichtung aufgebaut aus einem feinen Sieb und einem dieses stabilisierenden Stützsieb, die zum Beispiel durch Nieten miteinander verbunden sind. Es ist auch möglich, mehrere Doppelsiebscheiben hintereinander anzuordnen. Mittels der Kombination aus feinem Sieb und Stützsieb ist es möglich, auch bei hohem Mediumsdruck ein sehr feines Sieb zu verwenden, das alleine keine ausreichende mechanische Festigkeit hat, aber eine gewünschte hohe Filterfunktion aufweist. Dadurch wird sichergestellt, dass keine, im Medium eventuell mitgeführten Schmutzpartikel, in den Sensorbereich gelangen können.

Außerdem dient das Doppelsieb 100 dazu, die Strömung des Mediums zu vergleichmäßigen. Es werden so einheitliche Strömungsbedingungen des Mediums im Hauptströmungskanal geschaffen, die unabhängig sind von den Strömungsbedingungen, die vor Eintritt des Mediums in den Hauptströmungskanal bestanden haben.

Es ist besonders vorteilhaft, ein mehrteiliges und modulares Strömungswiderstandselement 60 im Strömungskonditionierungs-Einsatz 50 zu verwenden, das aufgebaut ist als eine Kombination aus einem Strömungskonditionierelement 110 und einer Blende 120. Das Strömungskonditionierelement 110 ist aufgebaut aus einer Vielzahl paralleler Kanäle, mit großem Gesamt-Öffnungsquerschnitt und wirkt mit Blenden 120 unterschiedlicher Öffnungsdurchmesser zusammen. Dadurch lässt sich der gewünschte Durchflussbereich des Strömungswiderstands bei Verwendung nur eines einzigen Strömungskonditionierelements stufenlos einstellen. Dabei spielt die Reihenfolge der beiden Teile Strömungskonditionierungselement 110 und Blende 120 im Strömungskonditionierungs-Einsatz 50 keine Rolle, was ein weiterer Vorteil für eine einfache Montage ist.

Der Strömungskonditionierungs-Einsatz 50 ist vorzugsweise rohrförmig ausgestaltet und weist eine Umfangseinschnürung 130 auf, die mit der umgebenden Wandung des Hauptströmungskanals 30 einen Ringraum 140 bildet. Im Bereich der Umfangseinschnürung 130 sind radiale, vom Innenraum 160 nach außen durchgehende, Öffnungen 150 angebracht, so dass sich eine fluidische Verbindung zwischen dem Innenraum 160 des Strömungskonditionierungs-Einsatzes 50 und dem Ringraum 140 ausbildet. Die radialen Öffnungen 150 liegen von einem der Anschlüsse 70 des Bypasskanals 40 axial entfernt, so dass sie nicht mit dessen Anschlüssen 70 fluchten.

Dadurch dass das Medium vom Innenraum 160 des Strömungskonditionierungs-Einsatzes 50 über die radialen Öffnungen 150 zunächst in den Ringraum 140 im Hauptströmungskanal 30 fließt, und dann in einen Anschluss 70 des Bypasskanals 40 gelangt, ist die radiale Anordnung des Strömungskonditionierungs-Einsatzes 50 im Hauptströmungskanal 30 beliebig. Es ist also bei der Montage nicht auf eine bestimmte Positionierung zu achten, wie es bei einer alternativen Konstruktion eines Strömungskonditionierungs-Einsatzes ohne Umfangseinschnürung und mit nur einer einzigen Öffnung der Fall ist. Dann muss nämlich darauf geachtet werden, dass diese Öffnung mit einem Anschluss des Bypasskanals fluchtet. So sind potentielle Fehlerquellen bei der Montage bereits durch konstruktive Maßnahmen ausgeschlossen. Außerdem erübrigt sich eine Rekalibrierung nach eventuell erfolgtem Aus- und Wiedereinbau des Strömungskonditionierungs-Einsatzes 50 in den Hauptströmungskanal 30.

Vorteilhafterweise weist der Strömungskonditionierungs-Einsatz 50 im Innenraum 160 an seinen beiden axialen Enden je eine durch eine Stufe begrenzte Erweiterung auf, die an einem Ende das Doppelsieb 100 bzw. am zweiten Ende den Strömungswiderstand 60 oder in einer Ausführungsform das Strömungskonditionierelement 110 und die Blende 120 aufnimmt. Die beiden Stufen definieren den Abstand zwischen Doppelsieb und Strömungswiderstandselement.

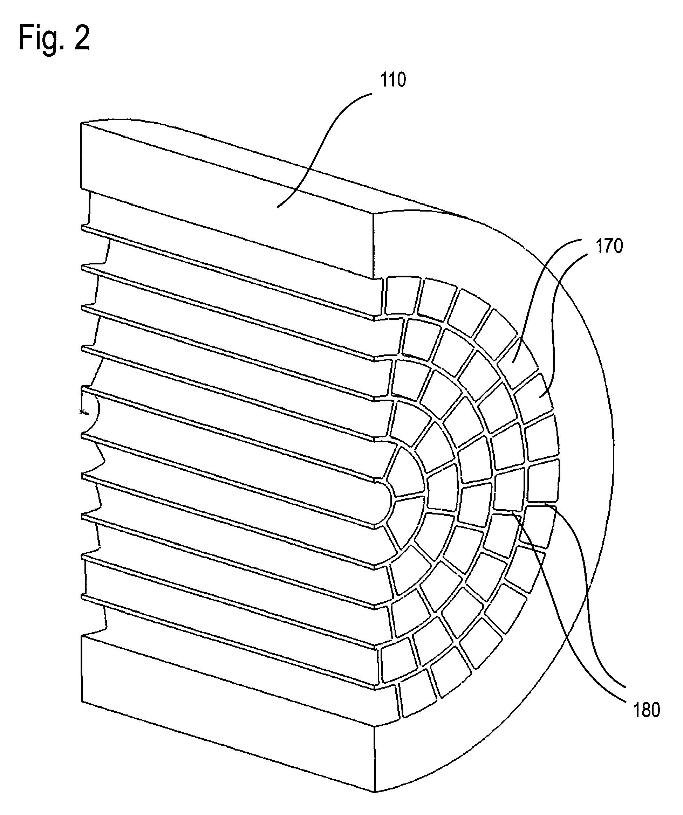

In **Fig. 2** ist eine besonders günstige Ausführungsform eines Strömungskonditionierelementes 110 dargestellt. Dieses weist eine Vielzahl paralleler Kanäle 170 auf, die von Wänden 180 begrenzt sind. Die Wandstärken der Wände 180 sind sehr klein und liegen typischerweise im Bereich zwischen 0,5 mm und 0,05 mm, wodurch ein Aufbau vieler paralleler Kanäle bei hohem Gesamt-Öffnungsquerschnitt realisiert wird.

Das Strömungskonditionierelement 110 wird vorzugsweise durch Photopolymerisation aus einem Kunststoff durch schichtweises Wachsen über einer entsprechenden Maske hergestellt. Das hat den Vorteil, dass die gewünschten geringen Wandstärken hergestellt werden können bei Einhaltung von sehr niedrigen Toleranzen. Dieses Herstellungsverfahren ermöglicht nahezu beliebige Kanalgeometrien.

Ein bevorzugtes Strömungskonditionierelement 110 weist wie in Fig. 2 annähernd trapezförmige Kanalquerschnitte auf.

## Patentansprüche

1. Vorrichtung zur Bereitstellung von konditionierten Fluidströmungen, mit einem Grundkörper (20), in dem ein Hauptströmungskanal (30) gebildet ist, mit einem Bypasskanal (40), der von dem Hauptströmungskanal abgezweigt und zu ihm zurückgeführt ist, und mit einem auswechselbaren Strömungskonditionierungs-Einsatz (50), der ein Strömungswiderstandselement (60) aufweist und in dem Hauptströmungskanal relativ zu dem Bypasskanal in einer solchen axialen Einbaustellung angeordnet ist, dass das Strömungswiderstandselement eine Druckdifferenz zwischen den Anschlüssen des Bypasskanals am Hauptströmungskanal erzeugt, **dadurch gekennzeichnet, dass** der Strömungskonditionierungs-Einsatz stromaufwärts von dem Strömungswiderstandselement wenigstens ein Doppelsieb (100) aufweist, das aus einem feinen Sieb und einem Stützsieb besteht, das das feine Sieb stabilisiert.

2. Vorrichtung nach Anspruch 1, bei welcher der Hauptströmungskanal einen erweiterten Abschnitt aufweist, der durch einen Anschlag (90) begrenzt ist, und der Strömungskonditionierungs-Einsatz in den erweiterten Abschnitt des Hauptströmungskanals eingesetzt ist, wobei der Anschlag die axiale Einbaustellung des Strömungskonditionierungs-Einsatzes definiert.

3. Vorrichtung nach einem der vorstehenden Ansprüche, bei der das Strömungswiderstandselement aus einer Kombination einer Blende (120) mit einem Strömungskonditionierelement besteht.

4. Vorrichtung nach einem der vorstehenden Ansprüche, bei welcher der Strömungskonditionierungs-Einsatz rohrförmig und mit einer Umfangseinschnürung versehen ist, die mit der umgebenden Wandung des Hauptströmungskanals einen Ringraum (140) bildet, der mit dem Innenraum des rohrförmigen Strömungskonditionierungs-Einsatzes durch radiale Öffnungen (150) kommuniziert, die von einem der Anschlüsse des Bypasskanals axial beabstandet sind.

5. Vorrichtung nach Anspruch 4, bei welcher der rohrförmige Strömungskonditionierungs-Einsatz in seinem Innenraum an einem ersten axialen Ende eine durch eine Stufe begrenzte Erweiterung aufweist, in die das Strömungswiderstandselement eingesetzt ist.

6. Vorrichtung nach Anspruch 4 oder 5, bei welcher der rohrförmige Strömungskonditionierungs-Einsatz in seinem Innenraum an einem zweiten axialen Ende eine durch eine Stufe begrenzte Erweiterung aufweist, in die das Doppelsieb (100) eingesetzt ist.

7. Vorrichtung nach einem der vorstehenden Ansprüche, wobei das Strömungskonditionierelement parallele und aneinandergrenzende Kanäle (170) aufweist, die von Wänden begrenzt werden, deren Wandstärke 0,5 mm bis 0,05 mm beträgt.

8. Vorrichtung nach Anspruch 7, wobei das Strömungskonditionierelement durch Photopolymerisation aus einem Kunststoff durch schichtweises Wachsen über einer entsprechenden Maske hergestellt ist.

9. Vorrichtung nach Anspruch 7 oder 8, wobei das Strömungskonditionierelement Kanäle (170) aufweist, deren Querschnitt vorzugsweise annähernd trapezförmig ist.

## Claims

1. An apparatus for providing conditioned fluid flows, comprising a base body (20) having a main flow duct (30) formed therein, a bypass duct (40) which is branched off from and led back to the main flow duct, and an exchangeable flow conditioning insert (50) which includes a flow resistance element (60) and is arranged in the main flow duct relative to the bypass duct in an axial installation position such that the flow resistance element generates a pressure difference between the ports of the bypass duct at the main flow duct, **characterized in that** the flow conditioning insert includes at least one double screen (100) upstream of the flow resistance element, the double screen consisting of a fine screen and a supporting screen which stabilizes the fine screen.

2. The apparatus according to claim 1, wherein the main flow duct has a widened section which is limited by a stop (90), and the flow conditioning insert is inserted in the widened section of the main flow duct, the stop defining the axial installation position of the flow conditioning insert.

3. The apparatus according to either of the preceding claims, wherein the flow resistance element consists of a combination of an orifice plate (120) and a flow conditioning element.

4. The apparatus according to any of the preceding claims, wherein the flow conditioning insert is tubular and provided with a peripheral constriction which, together with the surrounding wall of the main flow duct, forms an annular space (140) communicating with the interior of the tubular flow conditioning insert by means of radial openings (150) that are axially spaced from one of the ports of the bypass duct.

5. The apparatus according to claim 4, wherein the tubular flow conditioning insert has a widened portion in its interior at a first axial end, the widened portion being limited by a step and having the flow resistance element inserted therein.

6. The apparatus according to claim 4 or 5, wherein the tubular flow conditioning insert has a widened portion in its interior at a second axial end, the widened portion being limited by a step and having the double screen (100) inserted therein.

7. The apparatus according to any of the preceding claims, wherein the flow conditioning element includes parallel and adjacent ducts (170) that are defined by walls having wall thicknesses of from 0.5 mm to 0.05 mm.

8. The apparatus according to claim 7, wherein the flow conditioning element is produced by photopolymerization from a plastic material by growing in layers over an appropriate mask.

9. The apparatus according to claim 7 or 8, wherein the flow conditioning element includes ducts (170) having cross-sections which are preferably approximately trapezoidal.

## Revendications

1. Dispositif pour le fournissement de flux de fluide conditionnés, comportant un corps de base (20), dans lequel un canal d'écoulement principal (30) est formé, comportant un canal de dérivation (40) qui se ramifie du canal d'écoulement principal et est ramené vers celui-ci, et comportant un insert (50) de conditionnement d'écoulement échangeable qui présente un élément de résistance à l'écoulement (60) et qui est agencé dans le canal d'écoulement principal dans une telle position de montage axiale par rapport au canal de dérivation que l'élément de résistance à l'écoulement produit une différence de pression entre les raccords du canal de dérivation au canal d'écoulement principal, **caractérisé en ce que** l'insert de conditionnement d'écoulement présente en amont de l'élément de résistance à l'écoulement au moins un double tamis (100) composé d'un tamis fin et d'un tamis de support stabilisant le tamis fin.

2. Dispositif selon la revendication 1, dans lequel le canal d'écoulement principal présente un tronçon évasé délimité par une butée (90) et l'insert de conditionnement d'écoulement est inséré dans le tronçon évasé du canal d'écoulement principal, la butée définissant la position de montage axiale de l'insert de conditionnement d'écoulement.

3. Dispositif selon l'une des revendications précédentes, dans lequel l'élément de résistance à l'écoulement est composé d'une combinaison d'un diaphragme (120) avec un élément de conditionnement d'écoulement.

4. Dispositif selon l'une des revendications précédentes, dans lequel l'insert de conditionnement d'écoulement est tubulaire et est pourvu d'un rétrécissement périphérique qui forme ensemble avec la paroi du canal d'écoulement principal qui l'entoure un espace annulaire (140) qui communique avec l'espace intérieur de l'insert de conditionnement d'écoulement tubulaire par des orifices radiaux (150) qui sont axialement espacés de l'un des raccords du canal de dérivation.

5. Dispositif selon la revendication 4, dans lequel l'insert de conditionnement d'écoulement tubulaire présente dans son espace intérieur à une première extrémité axiale un évasement qui est délimité par un gradin et dans lequel l'élément de résistance à l'écoulement est inséré.

6. Dispositif selon la revendication 4 ou 5, dans lequel l'insert de conditionnement d'écoulement tubulaire présente dans son espace intérieur à une deuxième extrémité axiale un évasement qui est délimité par un gradin et dans lequel le double tamis (100) est inséré.

7. Dispositif selon l'une des revendications précédentes, l'élément de conditionnement d'écoulement présentant des canaux (170) parallèles et adjacents qui délimités par des parois dont l'épaisseur de paroi est comprise entre 0,5 mm et 0,05 mm.

8. Dispositif selon la revendication 7, l'élément de conditionnement d'écoulement étant fabriqué par photopolymérisation en une matière plastique par une croissance par couches au-dessus d'un masque approprié.

9. Dispositif selon la revendication 7 ou 8, l'élément de conditionnement d'écoulement présentant des canaux (170) dont la section transversale est de préférence approximativement trapézoïdale.
